# EUROPÄISCHE PATENTSCHRIFT

(11) **EP 0 681 670 B1**
(45) Veröffentlichungstag und Bekanntmachung des Hinweises auf die Patenterteilung: **13.05.1998**
(21) Anmeldenummer: 95903301.0
(22) Anmeldetag: 29.11.1994
(51) Int. Cl.: F16N 37/00, F16C 33/10

(54) **VERFAHREN UND VORRICHTUNG ZUM FÜLLEN DER AUSNEHMUNGEN EINES GEGENSTANDES MIT EINEM IN DER WÄRME FLÜSSIGEN MATERIAL, INSBESONDERE DER AUSNEHMUNGEN VON GLEITLAGERBUCHSEN MIT WACHS**
PROCESS AND DEVICE FOR FILLING RECESSES IN AN OBJECT WITH A MATERIAL WHICH FLOWS WHEN HEATED, IN PARTICULAR FOR FILLING RECESSES IN FRICTION BEARING BUSHINGS WITH WAX
PROCEDE ET DISPOSITIF PERMETTANT DE REMPLIR LES CAVITES D'UN OBJET AVEC UN MATERIAU DEVENANT LIQUIDE LORSQU'IL EST CHAUD, NOTAMMENT DE REMPLIR LES CAVITES DE COUSSINETS DE PALIERS LISSES AVEC DE LA CIRE

(30) Priorität: 29.11.1993 DE 4340489
(43) Veröffentlichungstag der Anmeldung: 15.11.1995
(73) Patentinhaber: Hiesl, Gerhard, 88471 Laupheim (DE)
(72) Erfinder: Hiesl, Gerhard, 88471 Laupheim (DE)
(86) Internationale Anmeldenummer: EP9403949
(87) Internationale Veröffentlichungsnummer: WO9514882

(56) Entgegenhaltungen:
- DE-A- 1 475 551
- DE-B- 1 204 028
- US-A- 1 396 089
- US-A- 2 698 774
- PATENT ABSTRACTS OF JAPAN vol. 9, no. 268 (M-424) 25. Oktober 1985 & JP,A,60 113 818 (HITACHI KENKI)

## Beschreibung

Die Erfindung betrifft ein Verfahren und eine Vorrichtung zum Füllen der Ausnehmungen eines Gegenstandes mit einem in der Wärme flüssigen Material, insbesondere der Ausnehmungen von Gleitlagerbuchsen mit Wachs.

Es ist bekannt, Gleitlagerbuchsen mit Ausnehmungen auszurüsten, beispielsweise mit spiralförmigen Nuten, die sich an der Lagerfläche entlangziehen. Die Nuten werden mit Fett gefüllt. Das Fett wird beim Betrieb des Lagers in kleinsten Mengen abgegeben und verteilt sich über die zu schmierende Fläche. Statt des Fetts kommt auch ein Spezialwachs zum Einsatz. Dieses Wachs ist kostengünstig und umweltverträglich. Die Erfindung betrifft jegliche Art von Schmiermittel, die bei Überschreiten einer bestimmten Temperatur flüssig werden, aber im Normalzustand, d.h. bei Zimmertemperatur fest sind.

Außerdem betrifft die Erfindung nicht nur solche Aussparungen, die nach der einen Seite der Lagerbuchse hin offen sind, sondern auch Durchgangsbohrungen, die somit eine leitende Verbindung zwischen der Innenfläche und der Außenfläche einer Lagerbuchse herstellen.

Das Einbringen eines solchen Materials, insbesondere eines Wachses in eine derartige Ausnehmung oder Bohrung ist mit einem gewissen Aufwand verbunden. In der Praxis ist es bekannt, die Ausnehmungen durch Einspritzen von Wachs im flüssigen Zustand auszufüllen. Auch das Eindrücken des Wachses in pastösem Zustand kommt in Betracht. Alle diese Verfahren und die zugehörigen Apparaturen sind jedoch teuer, und zwar sowohl was die Investitionskosten anbetrifft, als auch die Personalkosten.

US-A-2 698 774 beschreibt ein Verfahren zum Füllen der Poren von gesinterten Materialien für Lagerzwecke durch Eintauchen dieser Materialien in geschmolzenes Wachs und durch anschließendes Abkühlen. Das Verfahren läßt offen, ob und auf welche Weise die Materialien nach dem Eintauchen bis zu ihrem Erstarren abgesperrt werden. Die Druckschrift enthält keine Angaben über eine Vorrichtung zum Durchführen des Verfahrens.

Der Erfindung liegt die Aufgabe zugrunde, zwei Verfahren gemäß dem Oberbegriff der Ansprüche 1 und 4 sowie eine Vorrichtung gemäß dem Oberbegriff des Anspruchs 2 anzugeben, die ein zuverlässiges, sauberes und vollständiges Ausfüllen von Ausnehmungen gewährleisten, und zwar auch dann, wenn die Ausnehmungen komplizierte Konturen aufweisen; außerdem soll größtmögliche Wirtschaftlichkeit erreicht werden.

Diese Aufgabe wird durch die Merkmale der Ansprüche 1, 2 bzw. 4 gelöst.

Die folgenden Betrachtungen sollen sich nur mit der Herstellung wachsgefüllter Gleitlagerbuchsen befassen, da dies der häufigste Anwendungsfall der Erfindung sein wird.

Gemäß der Erfindung wird die betreffende Lagerbuchse in flüssiges Wachs eingetaucht, so daß sämtliche Hohlräume mit Wachs ausgefüllt werden. Hierbei erfolgt eine Temperaturangleichung der Lagerbuchse an das heiße Wachs. Dies führt zu einer optimalen Haftung. Aufgrund des hohen Flüssigkeitsgrades des Wachses werden auch die kompliziertesten Ausnehmungen, Bohrungen usw. vollständig von Wachs ausgefüllt.

Gemäß einer bevorzugten Ausführungsform der Erfindung werden ein Dorn in die Lagerbuchse eingeschoben bzw. eine Hülse auf die Lagerbuchse aufgeschoben, und zwar solange sich die Buchse noch im Wachsbad befindet. Bei diesem Einschieben bzw. Aufschieben findet eine Absperrung der Bohrungen statt.

Handelt es sich nicht um Bohrungen, sondern nur um Aussparungen, beispielsweise Spiralnuten, die an einer einzigen Fläche der Lagerbuchse vorgesehen sind, so bedarf es natürlich nur des einen der genannten Absperrorgane, somit entweder des Dorns oder der Hülse.

Handelt es sich um eine Lagerbuchse mit (durchgehenden) Bohrungen, so ist es natürlich auch denkbar, das eines der beiden Absperrorgane, somit der Dorn oder die Hülse, bereits vor dem Eintauchen der Lagerbuchse in das Wachsbad eingeschoben bzw. aufgeschoben werden. Das andere der beiden Elemente wird dann auf die Lagerbuchse aufgebracht, wenn sich diese im Wachsbad befindet.

Nach dem vollständigen Füllen der Ausnehmungen sowie deren anschließendem Absperren wird die Lagerbuchse mit dem in den Ausnehmungen befindlichen Wachs aus dem Tauchbad herausgezogen, und zwar wohlgemerkt bei immer noch abgesperrten Ausnehmungen. Dies ist notwendig, weil das Wachs ja noch flüssig ist. Aus dem Bad herausgenommen, läßt man das Wachs in den Ausnehmungen der Lagerbuchse erkalten. Sodann entfernt man das betreffende Absperrelement bzw. die beiden Absperrelemente. Bei Anwendung eines Dorns und einer Hülse kann es dadurch geschehen, das die Lagerbuchse mittels eines Auswerfers aus diesen beiden ausgestoßen wird. Sie ist sodann zum Einsatz in einem Gleitlager fertig.

Die Erfindung ist anhand der Zeichnungen näher erläutert. Dabei ist eine Lagerbuchse 1 dargestellt, welche Durchgangsbohrungen hat. Die Vorrichtung umfaßt unter anderem einen Ringteller 2, eine Führungseinheit 3, einen Tauchbehälter 4, einen Dorn 5, eine Hülse 6, eine Führungseinheit 7, ein Wasserbad 8 sowie einen Auswerfer 9.

Die Lagerbuchse 1 wird entweder manuell oder mittels Greifer oder Schieber auf einen Ringteller 2 gelegt und positioniert.
Nun wird die Lagerbuchse 1 auf diesem Ringteller 2 über eine Führungseinheit 3 in den mit flüssigen Wachs gefüllten Behälter 4 getaucht und darin allseitig von Wachs umschlossen. Während der Eintauchzeit, welche von der Lagerbuchsenabmessung abhängig ist, erfolgt eine Temperaturangleichung an das heiße Wachs zwecks optimaler Haftung desselben.

Danach stülpt sich ein Dorn 5 und eine Hülse 6 über die Lagerbuchse 1 und umschließt sie ringsum. Dorn 5 und Hülse 6 befinden sich auf einer getrennten Führungseinheit 7, welche jedoch auf der Führungseinheit 3 montiert ist. Das sich in den Hohlräumen der Lagerbuchse 1 befindliche Wachs ist nun eingeschlossen.

Nun fährt die Führungseinheit 3 nach oben aus dem Wachsbehälter 4 heraus, schwenkt auf die Seite und taucht nach unten in ein gekühltes Wasserbad 8 ein. Während dieses Vorgangs bleibt die Lagerbuchse 1 von der Hülse 6 und dem Dorn 5 umschlossen.

Im Wasserbad 8 wird die Lagerbuchse 1 abgekühlt und das bisher flüssige Wachs erstarrt in den Hohlräumen der Lagerbuchse 1.

Nach einer einstellbaren Zeit fährt die Führungseinheit 3 nach oben aus dem Wasserbad 8 heraus. Die Führungseinheit 7 mit Dorn 5 und Hülse 6 fährt ebenfalls nach oben und streift die Lagerbuchse 1 am Auswerfer 9 ab. Die Lagerbuchse 1 liegt nun auf dem Ringteller 2 und wird entweder manuell oder mittels Greifer oder Schieber entnommen und in einen Vorratsbehälter abgelegt.

Je nach Dimensionierung des Wachs- und des Wasserbehälters können alle Lagerbuchsenabmessungen mit diesem Verfahren auf nur einer Anlage mit Wachs gefüllt werden. Es bedarf nur einiger, relativ billiger Austauschteile, wie Dorn 5, Hülse 6, Auswerfer 9 und Ringteller 2.

Die Fertigung kann auf einem Rundschalttisch erfolgen, sodaß ein kontinuierlicher Ablauf gegeben ist.

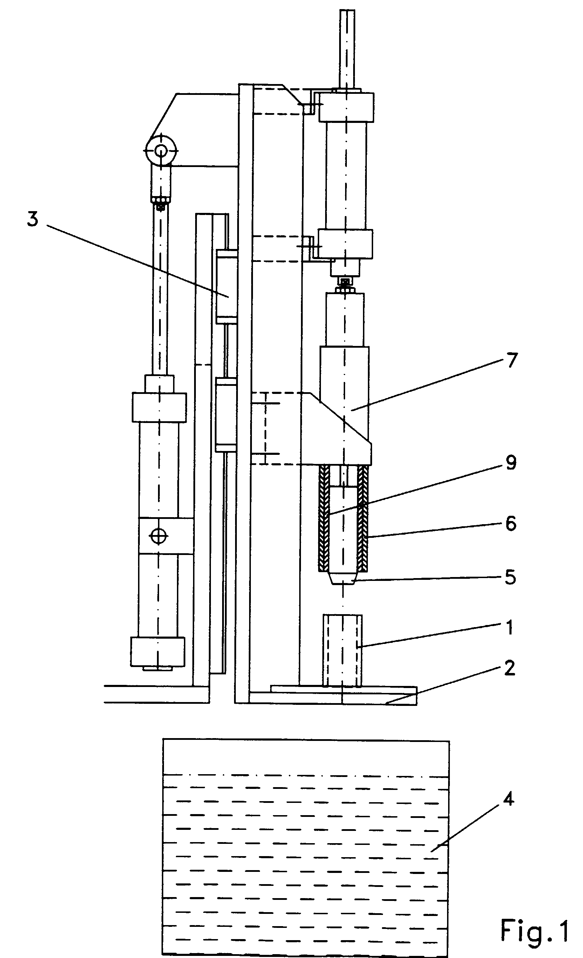

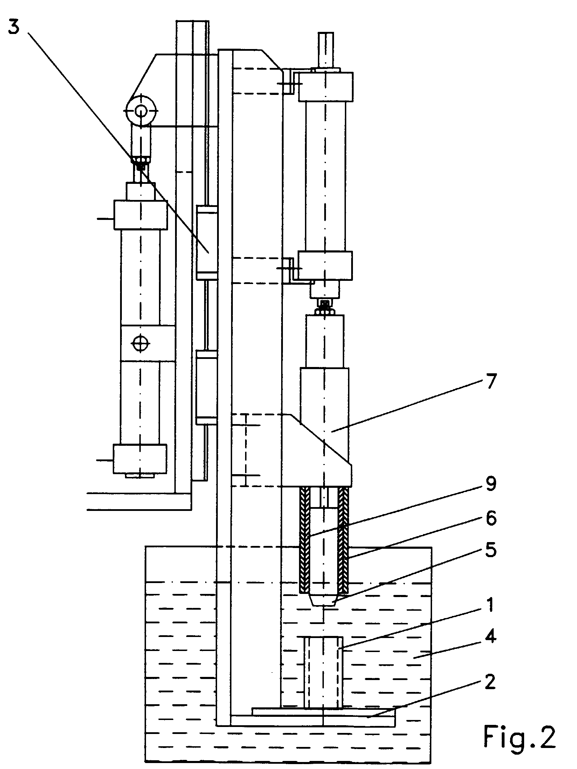

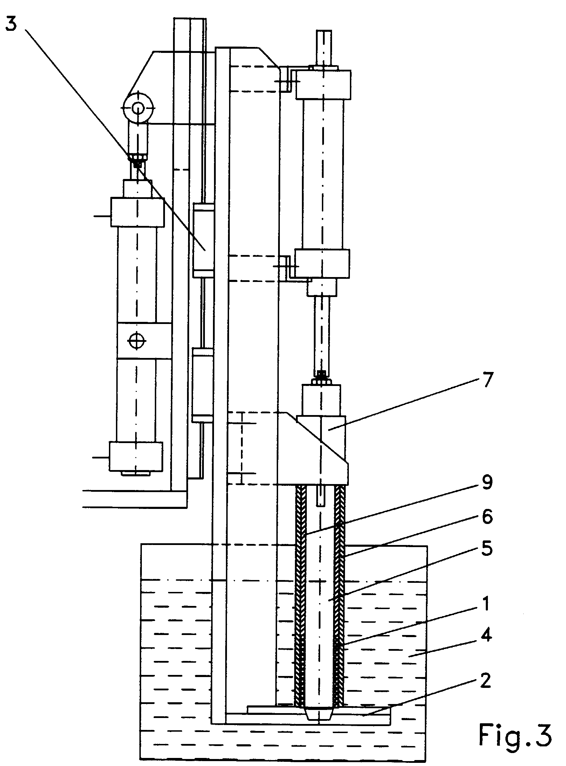

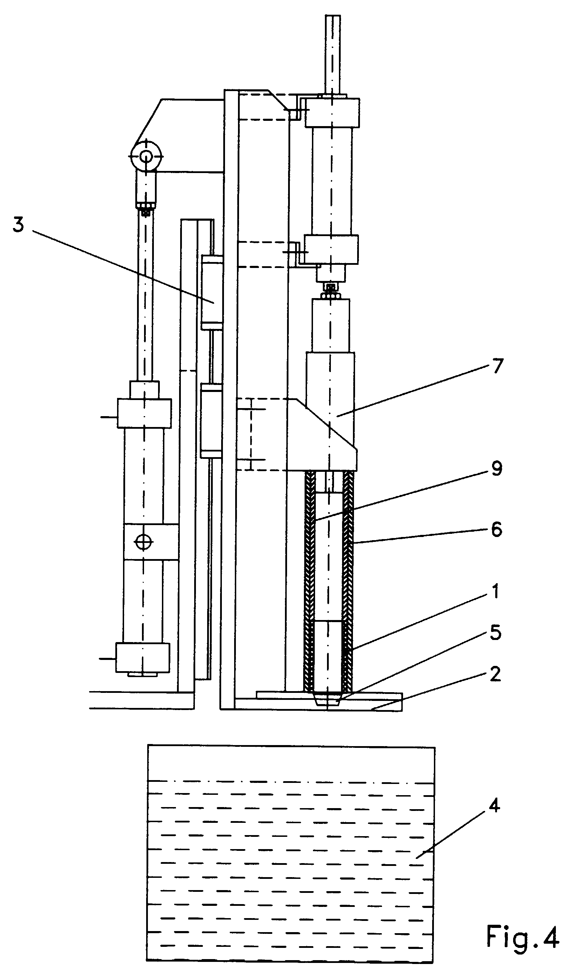

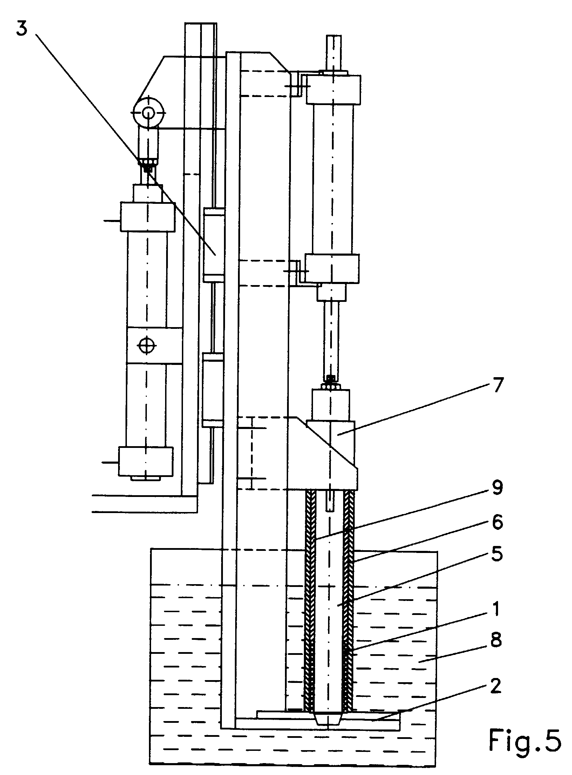

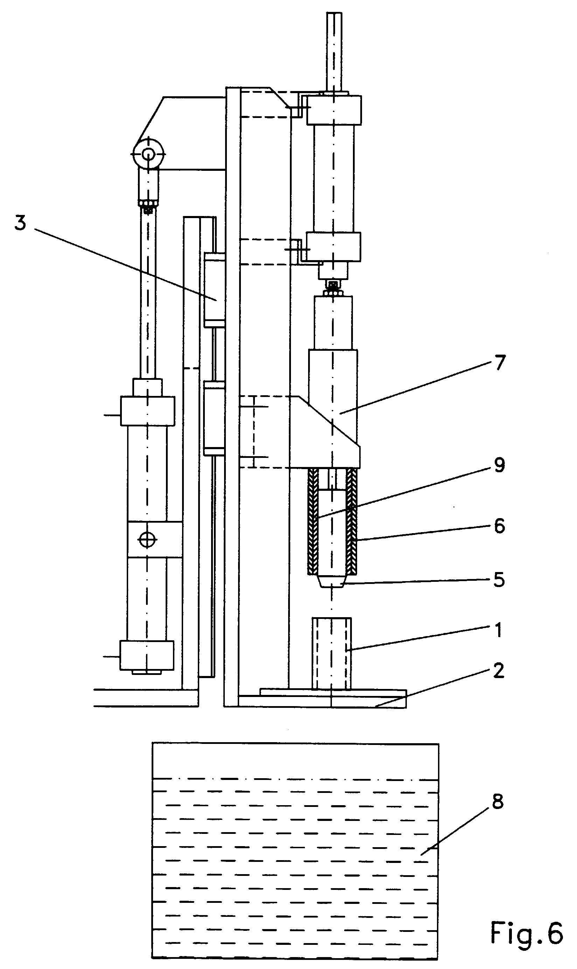

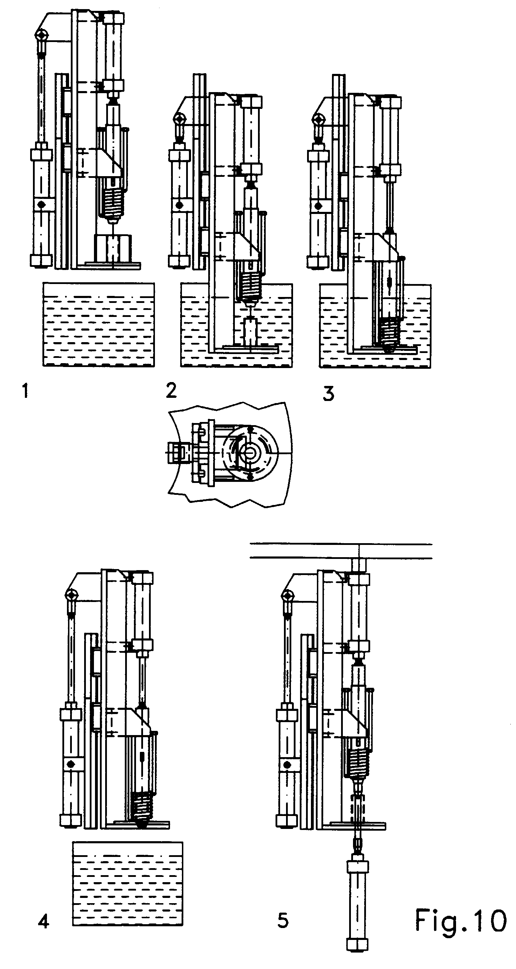

Die Figuren 1 bis 6 sowie 10 stellen eine Station dieser Rundschalttische in mehreren Bewegungszyklen dar.

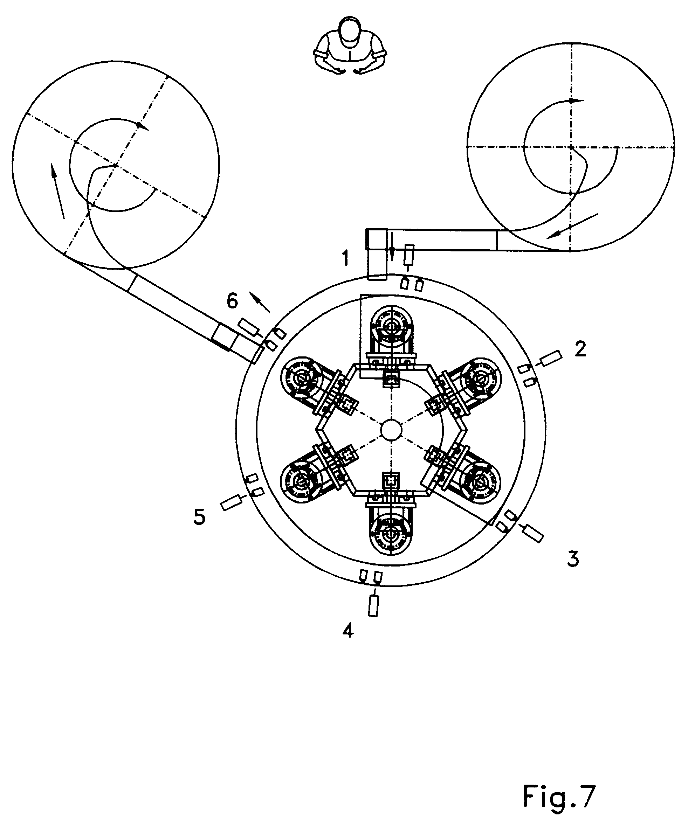

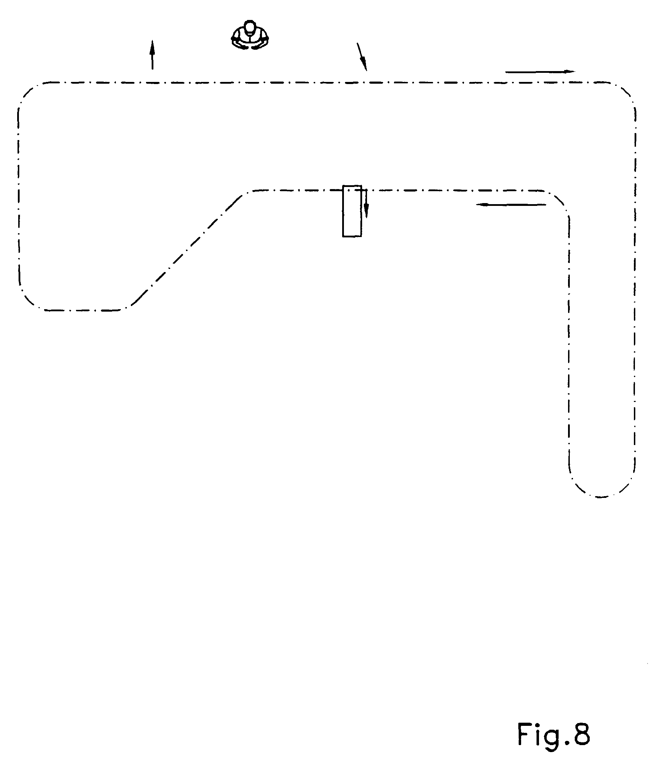

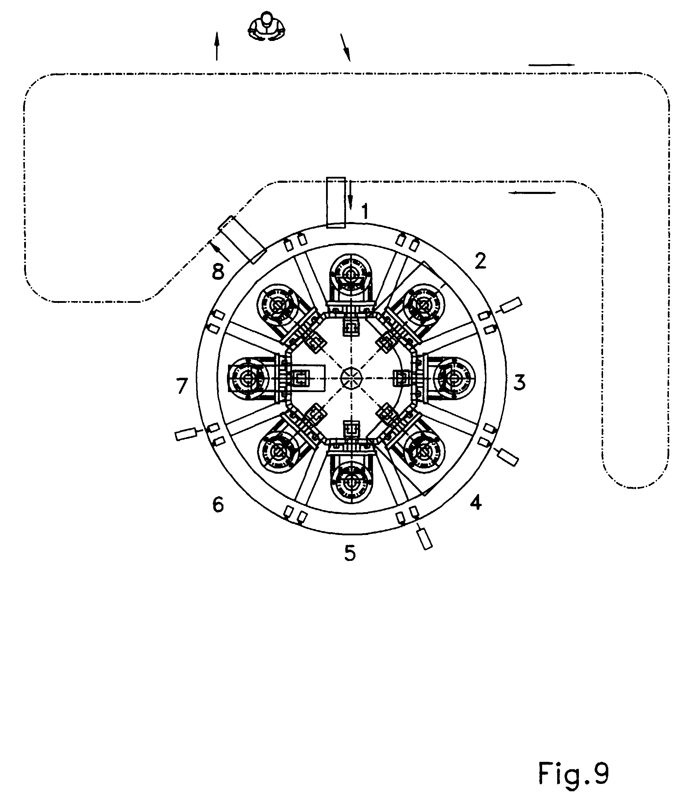

Die Figuren 7 bis 9 veranschaulichen Rundschalttischvarianten mit Zufuhreinrichtungen.

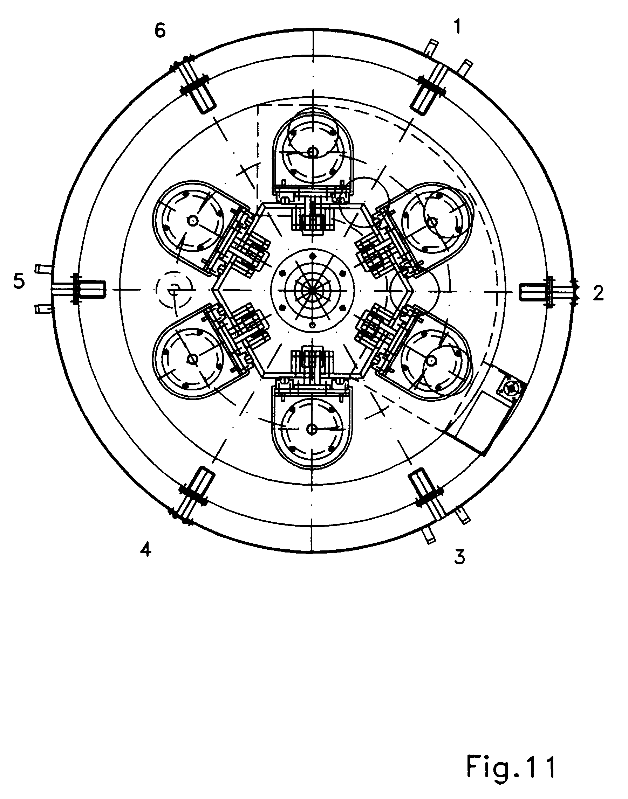

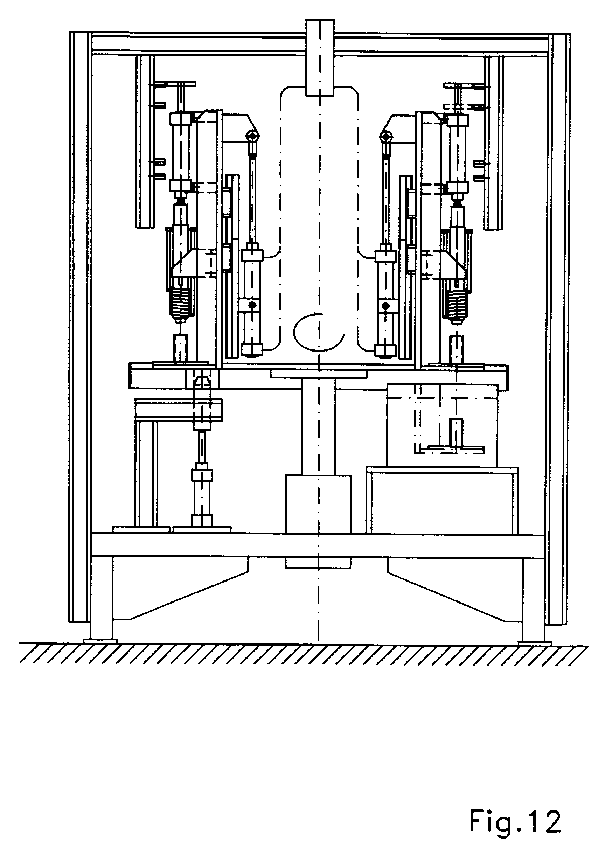

Die Figuren 11 und 12 veranschaulichen einen Rundschalttisch. Dieser umfasst sechs Arbeitsstationen. Bei einem Teil der Stationen befindet sich jeweils eine Tauchwanne mit Wachs, beispielsweise bei drei solcher Stationen. Auch wäre es denkbar, einer Mehrzahl von Stationen eine einzige Wanne zuzuordnen. Die übrigen Stationen sind frei von solchen Wannen. Mit einer solchen Vorrichtung können mehrere Lagerschalen kontinuierlich behandelt werden. Die Mehrzahl der Lagerschalen - genau so viel wie Stationen vorhanden sind - werden getaktet in Umlauf versetzt. Bei Erreichen der Wanne bzw. der Wannen werden die betreffenden Lagerschalen in das Tauchbad eingetaucht, mit der entsprechenden Abschirmung versehen, sodann herausgezogen. In den tauchwannen-freien Stationen kann das Wachs erstarren. Nach dem Erstarren werden die Abschirmungen entfernt.

## Patentansprüche

1. Verfahren zum Füllen der Ausnehmungen eines Gegenstandes mit einem Material, das bei Überschreiten einer bestimmten Temperatur flüssig wird, z.B. mit Wachs, insbesondere zum Füllen der Ausnehmungen von Gleitlagerbuchsen (1), wobei der Gegenstand in ein Bad von flüssigem Material, insbesondere von flüssigem Wachs (4), getaucht wird, gekennzeichnet durch die folgenden Merkmale:
1.1 die Ausnehmungen werden abgesperrt, solange sich der Gegenstand (1) noch im Tauchbad (4) befindet;
1.2 der Gegenstand (1) wird aus dem Tauchbad (4) herausgenommen, wobei die Ausnehmungen zunächst abgesperrt bleiben;
1.3 die Ausnehmungen werden nach Erstarren des darin befindlichen Materials freigegeben.

2. Vorrichtung zum Durchführen des Verfahrens nach Anspruch 1 zum Füllen der Ausnehmungen eines schalenförmigen oder zylindrischen Gegenstandes, insbesondere einer Gleitlagerschale oder einer Gleitlagerbuchse (1), mit Wachs, gekennzeichnet durch die folgenden Merkmale:
2.1 es ist eine Tauchwanne (4) zur Aufnahme eines Wachsbades vorgesehen;
2.2 es ist ein Schirm (5,6) zum Abdecken der Ausnehmungen vorgesehen.

3. Vorrichtung nach Anspruch 2, dadurch gekennzeichnet, daß der Gegenstand (1) eine Lagerbuchse mit Bohrungen ist, und daß ein äußerer Schirm in Gestalt einer Hülse (6), und ein innerer Schirm in Gestalt eines Dornes (5) oder einer Innenhülse vorgesehen sind.

4. Verfahren zum Herstellen einer Gleitlagerschale mit Ausnehmungen, die gegen die Gleitfläche hin offen sind, gekennzeichnet durch folgende Merkmale:
4.1 der Gegenstand (1) wird mit Kanälen versehen, die mit den Ausnehmungen in Verbindung stehen;
4.2 die Ausnehmungen werden durch einen Schirm, z.B. durch eine Hülse (6) oder einen Dorn (5), abgesperrt;
4.3 in die Kanäle wird ein Gleitmittel eingegossen, das oberhalb einer bestimmten Temperatur flüssig wird, insbesondere Wachs;
4.4 nach dem Erstarren des Gleitmittels wird der Schirm (5,6) entfernt.

5. Verfahren nach Anspruch 4, dadurch gekennzeichnet, daß die Kanäle im Bereich einer Stirnseite der Gleitlagerschale (1) nach außen münden.

## Claims

1. A method of filling the recesses of an object with a material that is liquid at or above a specific temperature but solid below that temperature, wherin said object particularly is a friction bearing bushing (1) and said material particularly is wax, said method comprising the steps of:
1.1 immersing the object (1) into a bath (4) of said liquid material;
1.2 blocking the recesses while the object (1) is still in said bath (4);
1.3 removing the object (1) from the bath (4), with the recesses remaining blocked;
1.4 solidifying the liquid material and unblocking the recesses which are filled with the said material;

2. A device for carrying out the method of claim 1 for filling the recesses of a shell-shaped or cylindrical object (1), wherin
2.1 an immersion vat (4) is provided for holding a bath of said liquid material; and
2.2 screening means (5,6) are provided for blocking the recesses.

3. The device of claim 2, wherin the object (1) is a bearing bushing with bores and external screening means comprising a sleeve (6) and internal screening means comprising a mandrel (5) or an inner sleeve are provided.

4. A method for the production of a friction bearing bushing with recesses connected by channels, which are open toward a sliding surface defined by said bearing, said method comprising the steps of:
4.1 channels, which connect the recesses of a bearing bushing (1), will be made;
4.2 blocking the recesses by screening means - comprises a leeve (6), a mandrel (5), or both;
4.3 pouring a lubricant into the channels, said lubricant being liquid above a certain temperature but solid below that temperature, and wherin said lubricant particularly is wax;
4.4 solidifying the lubricant; and removing the screening means (5,6);

5. The method of claim 4, wherein the channels open toward the outside of the bushing in the region of a front face of the bushing (1).

## Revendications

1. Procédé de remplissage des creux d'un objet avec un matériau susceptible de fondre lorsqu'il atteint une température prédéfinie, par exemple de la cire. Il s'agit en particulier du remplissage des creux de coussinets lisses (1). Les objets sont immergés dans un bain rempli d'un matériau liquide, de la cire (4) de préférence. La présente invention est caractérisée par le fait que:
1.1 les creux sont protégés pendant le séjour de l'objet (1) dans le bain (4) d'immersion
1.2 l'objet (1) est retiré du bain (4) d'immersion sans déboucher les creux.
1.3 les creux sont seulement débouchés après solidification du matériau de remplissage.

2. Dispositif pour réaliser le procédé selon la revendication 1 capable de réaliser un remplissage des creux d'un objet en forme de cylindre ou d'anneau, en particulier des paliers et des coussinets lisses (1) avec de la cire. La présente invention est caractérisée par le fait que:
2.1 le procédé utilise une cuvette (4) servant de bain de cire.
2.2 le procédé utilise un écran de protection (5,6) des creux.

3. Dispositif selon la revendication 2, caractérisé par le fait que l'objet (1) est un coussinet perforé et qu'il est protégé par un écran extérieur en forme de douille (6) et d'un écran intérieur en forme de noyau (5) ou de douille intérieure.

4. Procédé de réalisation d'un coussinet lisse équipé de creux ouverts dans la surface de frottement,
caractérisé par le fait que:
4.1 l'objet (1) comprend des canaux en liaison directe avec les creux
4.2 les creux sont protégés par un écran de protection, par exemple en forme de douille (6) ou de noyau (5)
4.3 le matériau lubrifiant susceptible de fondre à une température prédéfinie, en particulier de la cire, est coulé dans les canaux
4.4 l'écran de protéction (5,6) est retiré après solidification du matériau lubrifiant

5. Procédé selon la revendication 4, caractérise par le fait que les ouvertures des canaux d'une des faces frontales du coussinet (1) sont dirigées vers l'exterieur.
